Europäisches Patentamt

European Patent Office

Office européen des brevets

(19)

(11) Numéro de publication : **0 404 670 B1**

(12)

# FASCICULE DE BREVET EUROPEEN

(45) Date de publication du fascicule du brevet :
**02.12.92 Bulletin 92/49**

(51) Int. Cl.$^5$ : **F16L 11/08**

(21) Numéro de dépôt : **90401734.0**

(22) Date de dépôt : **18.06.90**

(54) **Procédé d'optimisation de tubes multi-couches en matériaux composites et tubes obtenus par le procédé.**

(30) Priorité : **20.06.89 FR 8908308**

(43) Date de publication de la demande :
**27.12.90 Bulletin 90/52**

(45) Mention de la délivrance du brevet :
**02.12.92 Bulletin 92/49**

(84) Etats contractants désignés :
**BE DE DK ES GB GR IT NL**

(56) Documents cités :
**WO-A-87/02116**
**FR-A- 2 402 147**
**GB-A- 2 059 538**

(73) Titulaire : **INSTITUT FRANCAIS DU PETROLE**
**4, Avenue de Bois Préau**
**F-92502 Rueil-Malmaison (FR)**
Titulaire : **AEROSPATIALE**
**37, Boulevard de Montmorency**
**F-75781 Paris Cédex 16 (FR)**

(72) Inventeur : **Sparks, Charles**
**19 bis, rue Pasteur**
**F-78110 Le Vesinet (FR)**
Inventeur : **Schmitt, Jacques**
**14, rue du Général Leclerc**
**F-92270 Bois Colombe (FR)**
Inventeur : **Metivaud, Guy**
**5, avenue du Président Poincarré**
**F-33400 Talence (FR)**
Inventeur : **Auberon, Marcel**
**Résidence Orion, 14, allée du Passen**
**F-33160 Le Haillan (FR)**

## Description

La présente invention a pour objet un procédé d'optimisation des caractéristiques de tubes multi-couches en matériaux composites, permettant de maintenir dans des limites spécifiées les contraintes qu'ils doivent supporter en réponse aux efforts susceptibles de lui être appliqués, et les tubes obtenus par le procédé.

Les matériaux composites sont réalisés en enrobant des fibres de verre, de carbone ou d'autres produits comme des aramides, dans une substance thermoplastique ou thermodurcissable telle qu'une résine époxy, que l'on désigne généralement par matrice.

Le procédé selon l'invention trouve ses applications dans de nombreux domaines et en particulier pour la fabrication de tubes utilisés dans l'industrie pétrolière.

On sait que les opérations de recherche et d'exploitation d'hydrocarbures en mer nécessitent l'emploi de colonnes tubulaires reliant le fond de la mer à un support de surface tel qu'une plateforme de forage ou d'exploitation ou une bouée de subsurface. Ces colonnes que l'on désigne couramment par "risers" peuvent servir par exemple à la protection des tubes de production ou "tubings". Bien que n'étant pas soumis en service normal à la pression du fluide montant du gisement, les colonnes doivent être capables de la supporter en cas de fuite ou de rupture des tubes de production. Dans les conditions où elles sont utilisées, les colonnes tubulaires sont susceptibles de subir des variations de longueur importantes en raison de leurs poids, des variations de température ou bien encore d'effets de fonds qui se produisent quand une élévation de pression accidentelle crée des tensions longitudinales à leur sommet. L'augmentation de pression ou de température s'accompagne généralement d'une tendance au flambage, ce qui nécessite l'emploi de guides spéciaux et crée d'importantes contraintes de flexion et compression à leur base.

On utilise aussi ce type de colonne autour des colonnes de forage en mer notamment pour l'injection de boue. De la même façon, l'augmentation de la pression interne crée des effets analogues au flambage et rend nécessaire l'utilisation d'un système de guidage complexe.

Les effets notés ci-dessus rendent difficiles l'ensouillage des conduites de collecte sous-marines qui en se déformant, ont tendance à quitter la tranchée où on les a enfouies. Pour échapper aux difficultés liées à l'allongement des colonnes, un procédé consiste quand celà est possible, à les soumettre à d'importantes précontraintes en tension ou bien à les maintenir tendues au moyen de systèmes de tensionnement en général très complexe qui assurent une traction minimale dépendant des conditions opératoires imposées.

L'art antérieur dans le domaine des tubes multi-couches réalisé en enroulant hélicoïdalement sur un mandrin plusieurs nappes de fils ou de fibres telles que des fibres de verre par exemple, les fils ou fibres composant les différentes couches étant enroulées avec des pas différents les uns des autres selon les couches, est décrit par exemple dans les brevets GB-A-2 059 538 ou WO-A-8702116.

On connait un procédé pour fabriquer des tubes dont l'allongement est pratiquement insensible aux variations des conditions opératoires, de manière à simplifier beaucoup leur mise en oeuvre. Par le brevet FR-A-2 557 254 notamment, on connait un procédé permettant la réalisation de conduites flexibles dont l'allongement est pratiquement insensible à l'effet de la pression interne, en superposant plusieurs nappes de fils ou câbles enroulées hélicoïdalement et en choisissant leurs raideurs et leurs angles d'enroulement respectifs dans une gamme de valeurs bien définies.

Par le brevet français FR-A-2 627 840 (publié 01.09.89) aussi, on connait un procédé de réalisation de tubes en matériaux composites dont la longueur ne varie pratiquement pas sous l'effet des variations de la pression interne. Les tubes ainsi réalisés comprennent plusieurs couches de matériaux composites comportant chacune plusieurs nappes de fibres enrobées enroulées hélicoidalement suivant un même pas mais avec des sens d'enroulements opposés, les volumes des nappes, leurs modules d'élasticité et leurs angles d'enroulement respectifs étant choisis pour que les valeurs d'une fonction déterminée qui dépend de ces trois paramètres, soient comprises entre deux bornes bien définies. On vérifie à l'usage que la sélection pour les paramètres de valeurs compatibles avec une valeur permise pour la fonction de combinaison, conduit bien au résultat recherché.

Mais les procédés antérieurs ne permettent généralement pas de trouver les meilleures valeurs possibles pour les différents paramètres. Cette latitude possible des paramètres a une incidence certaine sur le poids et le prix de revient des tubes fabriqués. Il est donc souhaitable, à performances égales, d'optimiser les valeurs des différents paramètres de manière à diminuer leur coût.

Le procédé selon l'invention remédie aux imprécisions des procédés antérieurs en permettant l'optimisation des caractéristiques de tubes en matériaux composites constitués d'un certain nombre de couches de matériaux composites d'épaisseurs définies et comportant chacune plusieurs nappes de fibres enroulées en hélice, les différentes couches étant définies par au moins deux paramètres caractéristiques, de manière que leur allongement sous l'effet de la température et de la pression, ainsi que les contraintes limites subies par les différentes couches pour des valeurs maximales imposées des forces de traction et de pression susceptibles de leur être appliqueés, soient très proches de valeurs limites spécifiées. Le procédé est caractérisé en ce que :

- l'on définit un tube initial en imposant a priori un ensemble de valeurs pour lesdits paramètres,
- on détermine pour le tube initial ainsi défini, les valeurs prises par lesdits allongements et contraintes limites,
- on détermine l'incidence sur lesdits allongements et contraintes limites, de faibles écarts appliqués successivement à chacun des paramètres caractérisant le tube initial, de manière à établir des relations linéaires liant globalement les valeurs de chacun desdits allongements et contraintes limites aux écarts appliqués;
- on détermine les relations inverses traduisant l'incidence des variations des valeurs desdits allongements et contraintes limites sur les valeurs des différents paramètres et
- on sélectionne de proche en proche les variations à imposer aux paramètres définissant le tube pour approcher aussi près que l'on veut des valeurs spécifiées pour les allongements et contraintes limites.

Le procédé peut s'appliquer à l'optimisation des caractéristiques de tubes à symétrie cylindrique réalisés en matériaux composites et constitués d'un certain nombre n de couches d'épaisseurs définies réalisées à partir d'au moins deux matériaux composites différents et comportant chacune plusieurs nappes de fibres enroulées en hélice, les différentes couches étant définies par au moins deux paramètres caractéristiques qui sont leurs épaisseurs respectives et les angles entre les directions d'allongement des fibres des différentes nappes et l'axe du tube, de manière que leurs allongements (dLp,dLt) sous l'effet de la pression et de la température, la contrainte limite (CLc) pour une traction spécifiée subie par les couches réalisées dans un même premier matériau composite et la contrainte limite (CLv) pour une pression maximale spécifiée, subie par les couches réalisées dans le même second matériau composite soient très proches de valeurs limites spécifiées (CLco,CLvo,dLpo,dLto). Le procédé est alors caractérisé en ce que :

- l'on définit un tube initial en imposant a priori au moins une valeur commune d'épaisseur (Ec,Ev) pour les couches réalisées dans un même matériau composite et au moins une valeur angulaire commune d'enroulement (Ac,Av) pour les fibres des couches réalisées dans un même matériau composite,
- on détermine les valeurs pour le tube initial ainsi défini, des allongements (dLp,dLt) et contraintes limites (CLc,CLv),
- on détermine les incidences sur lesdits allongements et contraintes, de faibles écarts appliqués successivement à chacune des deux valeurs angulaires (Ac,Av) et des deux épaisseurs (Ec,Ev) caractérisant le tube initial, de manière à établir des relations linéaires liant globalement les variations (VG(CLc),VG(CLv), VG(dLp), VG(dLt)) des valeurs de chacun desdits allongements et contraintes à tous les écarts appliqués;
- on détermine les relations inverses traduisant l'incidence des variations des valeurs desdits allongements et contraintes sur les valeurs des différents paramètres (Ac,Av,Ec,Ev) et
- on sélectionne de proche en proche les variations à imposer auxdits angles d'enroulement et auxdites épaisseurs définissant lesdits tubes pour réduire les écarts entre les allongements et contraintes limites déterminées pour le tube et les allongements et contraintes limites spécifiées de manière à se rapprocher aussi près que l'on veut desdits allongements et contraintes spécifiés.

Le procédé peut s'appliquer à la réalisation d'un tube comportant des couches réalisées avec des fibres de carbone enroulées avec un pas d'enroulement relativement grand et des couches réalisées avec des fibres de verre enroulées avec un pas d'enroulement plus faible.

Le procédé peut s'appliquer par exemple à des tubes dans lequel les fibres de toutes les couches réalisées à partir d'un même matériau ont un pas d'enroulement sensiblement identique.

Le procédé comporte par exemple la détermination de l'incidence des valeurs desdits allongements et contraintes limites sur les différents paramètres par le calcul de la matrice inverse de la matrice constituée par les coefficients des relations linéaires reliant lesdits allongements et contraintes limites auxdits écarts appliqués.

Le tube optimisé en matériaux composites objet de l'invention comporte un certain nombre n de couches de matériaux composites constituées chacune de plusieurs nappes de fibres enroulées en hélice, les différentes couches étant définies par leurs épaisseurs et les angles entre les directions d'allongement des fibres et l'axe du tube. Il est caractérisé en ce que certaines desdites couches sont réalisées avec des fibres de carbone enroulées avec un pas d'enroulement compris entre 10 et 25 degrés et certaines autres couches sont réalisées avec des fibres de verre enroulées avec un angle d'enroulement compris entre 50 et 75 degrés, et en ce que les valeurs des angles d'enroulement dans les fourchettes angulaires spécifiées ainsi que les épaisseurs des différentes couches sont optimisés pour que l'allongement (dLp, dLt) du tube sous l'effet de la pression et/ou de la température, dans une gamme fixée de variation de température et de pression, soit sensiblement nul, et que la contrainte limite (CLc) pour une traction spécifiée subie par les couches réalisées dans un même premier matériau composite ainsi que la contrainte limite (CLv) pour une pression maximale spécifiée, subie par les couches réalisées dans le même second matériau composite, soient très proches de valeurs limites spécifiées (CLco, CLvo, dLpo, dLto).

Les fibres de toutes les couches réalisées à partir d'un même matériau peuvent avoir un pas d'enroulement sensiblement identique. Mais ils peuvent avoir aussi un pas d'enroulement variant d'une couche à l'autre autour d'une valeur moyenne.

Suivant un exemple de réalisation particulier le tube peut être réalisé à partir de fibres de carbone et de verre dont les modules d'élasticité dans le sens des fibres sont respectivement de l'ordre de 140 GPa et 56 GPa, les modules dégradés d'élasticité transverse et de cisaillement sont de l'ordre de 1 GPa, les coefficients de Poisson sensiblement égaux à 0,28, ces fibres pouvant supporter des contraintes limites respectives de l'ordre de 1,2 GPa et 1,5 GPa et étant bobinées sur un noyau dont le diamètre est de l'ordre de 0,20 mètre. Il est alors caractérisé en ce que, pour une force de traction limite de l'ordre de 4500 kN et une pression limite de l'ordre de 100 MPa avec une variation d'allongement sensiblement nulle pour des plages de variation imposées de la pression et de la température, il comporte des couches de fibres de carbone d'épaisseur voisine de $5*10^{-3}$ mètre bobinées sous un angle de l'ordre de 15 degrés, et des couches de fibres de verre d'épaisseur voisine de $10*10^{-3}$ mètre bobinées sous un angle de l'ordre de 60 degrés.

Suivant une variante du mode de réalisation précédent, lesdites valeurs angulaires de bobinage des fibres sont des valeurs moyennes, les angles de bobinage des différentes couches réalisées avec un même type de fibre variant d'une couche à une autre autour desdites valeurs moyennes.

D'autres caractéristiques et avantages du procédé et des tubes obtenus par le procédé selon l'invention apparaitront mieux à la lecture de la description ci-après en se référant à la figure annexée qui montre un exemple de tube comportant un empilement de couches en matériaux composites sur un noyau central cylindrique.

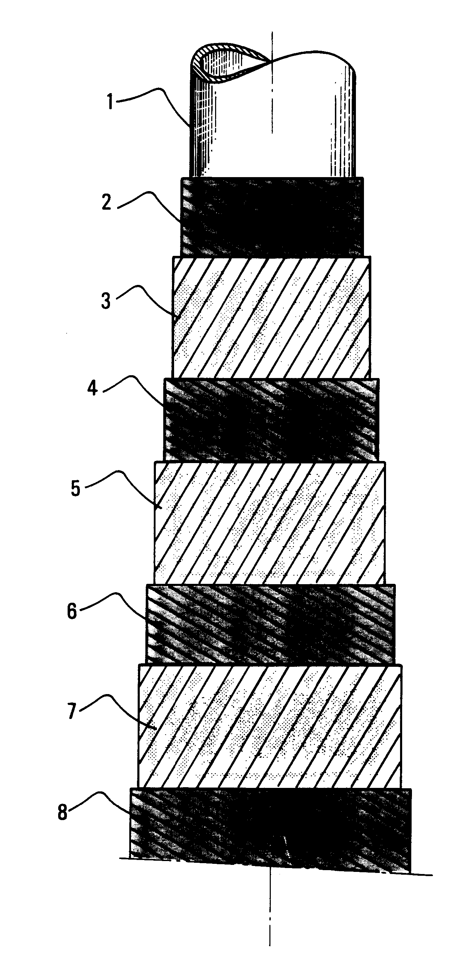

Les différentes couches comportent une ou plusieurs nappes superposées consistant chacune en une paire d'enroulements hélicoïdaux entrecroisés de fibres de renforcement avec le même pas d'enroulement par exemple mais en sens contraire l'une de l'autre. Les fibres de chaque paire sont donc disposées symétriquement et les angles entre leurs directions d'allongement respectives et l'axe du noyau sont donc égaux en valeur absolue. On peut choisir par exemple un même pas d'enroulement pour toutes les nappes de chaque couche. Les nappes de chaque couche sont noyées dans un matériau d'enrobage qui peut être par exemple une résine époxy. Pour la réalisation des couches, on utilise des fibres de renforcement en matériaux composites différents tels que du verre, du carbone, de l'aramide ou une combinaison de matériaux composites différents. On superpose de préférence des couches faites avec des fibres de nature et de pas d'enroulement différents. Ainsi, les couches 2,4,6,8 (Fig.1) peuvent être réalisées avec des fibres de renforcement à pas d'enroulement relativement faible offrant une grande résistance à la pression, et les couches 3,5,7 avec des fibres à pas d'enroulement plus grand tirées d'un matériau composite ayant un module de Young plus grand, de manière à bien résister aux efforts de traction sur le tube. Les premières peuvent être des fibres de verre et les secondes, des fibres en carbone.

Les différentes étapes du procédé selon l'invention sont les suivantes:
- Etape 1 : Une première étape consiste tout d'abord dans le choix a priori de valeurs initiales pour les paramètres à optimiser. Il s'agit par exemple
  - du diamètre interne du tube à construire : D
  - de l'angle sous lequel sont bobinées les fibres du premier matériau : Ac
  - de l'angle sous lequel sont bobinées les fibres du second matériau : Av
  - de l'épaisseur de la couche de premier matériau : Ec, et
  - de l'épaisseur de la couche de second matériau : Ev.
- Etape 2 : On spécifie ensuite les objectifs à atteindre pour le tube final :
  - la contrainte limite à ne pas dépasser dans le premier matériau (pour un effort de traction spécifié) : CLco
  - la contrainte limite correspondante dans le second matériau (pour une pression spécifiée également) : CLvo
  - l'allongement maximal toléré sous l'effet de la pression : dLpo (on impose par exemple dLpo=0), et
  - l'allongement maximal toléré sous l'effet de la température : dLto (on peut imposer aussi dLto=0)
- Etape 3 : Le tube initial ayant été défini a priori, on peut déterminer les valeurs effectives des contraintes limites CLc et CLv dans le premier et le second matériaux pour l'effort de traction et la pression spécifiés ainsi que les allongements du tube dLp et dLt à la pression et la température spécifiés.

Ces contraintes limites et allongements sont déterminés par l'application des lois de Hooke et Kirchhoff bien connues des spécialistes en mécanique du solide.
- Etape 4 : On modifie alors légèrement un premier paramètre, Ac par exemple, parmi ceux choisis pour caractériser le tube initial. Soit ΔAc la valeur de l'écart. On détermine l'incidence de l'écart appliqué sur les effets c'est-à-dire les contraintes limites CLc,CLv et les allongements dLp et dLt obtenus pour le tube a priori. Pour ces quatre contraintes et allongements, on note par exemple des variations ΔCLc, ΔCLv, ΔdLp et ΔdLt. Ces résultats permettent de déterminer les variations relatives ΔCLc/ ΔAc, ΔCLv/ ΔAc, ΔdLp/ ΔAc et ΔdLt/ ΔAc.

Pour simplifier les notations, on désignera par la suite I (effet, paramètre) le rapport entre la variation d'un effet concomittante à la variation d'un paramètre. Ainsi dans l'exemple donné, le rapport ΔCLc/ ΔAc, ΔCLv/ΔAc, ΔdLp/ΔAc et ΔdLt/ ΔAc seront écrits : I(CLc,Ac), I(CLv,Ac), I(dLp,Ac) et I(dLt,Ac).

De la même façon, on fait varier ensuite légèrement un second des paramètres du tube défini a priori. On applique par exemple à Av un écart ΔAv et l'on détermine de la même façon les incidences ΔCLc, ΔCLv, ΔdLp et ΔdLt sur les contraintes et allongements, de manière à former les rapports I(CLc,Av), I(CLv,Av), I(dLp,Av) et I(dLt,Av).

Pour un écart ΔEc appliqué à Ec, on répète le même processus pour former les rapports: I(CLc,Ec), I(CLv,Ec), I(dLp,Ec) et I(dLt,Ec). Un écart ΔEt appliqué au paramètre Et, conduira par le même processus à la formation des rapports I(CLc,Et), I(CLv,Et), I(dLp,Et) et I(dLt,Et).

- Etape 5 : On peut alors établir l'incidence globale sur chaque contrainte et allongement caractéristique, de petites variations appliquées simultanément aux quatre paramètres sous la forme de combinaisons linéaires de celles-ci, les coefficients de proportionnalité étant les valeurs des incidentes précédemment obtenues. Les relations entre les variations globales VG(CLc), VG(CLv), VG(dLp) et VG(dLt) des contraintes et allongements sous l'effet des variations des paramètres, peuvent s'exprimer par les relations :

$$VG(CLc) = I(CLc,Ac) * \Delta Ac + I(CLc,Av) * \Delta Av + I(CLc,Ec) * \Delta Ec + I(CLc, Ev) * \Delta Et,$$
$$VG(CLv) = I(CLv,Ac) * \Delta Ac + I(CLv,Av) * \Delta Av + I(CLv,Ec) * \Delta Ec + I(CLv, Ev) * \Delta Et,$$
$$VG(dLp) = I(dLp,Ac) * \Delta Ac + I(dLp,Av) * \Delta Av + I(dLp,Ec) * \Delta Ec + I(dLp, Ev) * \Delta Et,$$
$$VG(dLt) = I(dLt,Ac) * \Delta Ac + I(dLt,Av) * \Delta Av + I(dLt,Ec) * \Delta Ec + I(dLt, Ev) * \Delta Et.$$

L'ensemble de ces relations peut s'écrire plus commodément sous la forme matricielle suivante :

$$\begin{pmatrix} VG(CLc) \\ VG(CLv) \\ VG(dLp) \\ VG(dLt) \end{pmatrix} = \begin{pmatrix} I(CLc,Ac) & I(CLc,Av) & I(CLc,Ec) & I(CLc,Et) \\ I(CLv,Ac) & I(CLv,Av) & I(CLv,Ec) & I(CLv,Et) \\ I(dLp,Ac) & I(dLp,Av) & I(dLp,Ec) & I(dLp,Et) \\ I(dLt,Ac) & I(dLt,Av) & I(dLt,Ec) & I(dLt,Et) \end{pmatrix} * \begin{pmatrix} Ac \\ Av \\ Ec \\ Ev \end{pmatrix}$$

La matrice M ci-dessus relie les variations globales des contraintes et allongements subis par le tube, aux écarts imposés aux paramètres.

- Etape 6 : On détermine alors réciproquement les relations qui relient les écarts imposés aux paramètres aux variations globales des contraintes et allongements. De cette manière, on va connaître avec précision l'incidence que peuvent avoir les variations imposées aux paramètres sur les performances du tube. L'opération peut s'effectuer commodément au moyen d'un calculateur programmé pour inverser la matrice M et l'on obtient :

$$\begin{pmatrix} Ac \\ Av \\ Ec \\ Ev \end{pmatrix} = M^{-1} * \begin{pmatrix} VG(CLc) \\ VG(CLv) \\ VG(dLp) \\ VG(dLt) \end{pmatrix}$$

où $M^{-1}$ représente l'inverse de la matrice M

Le tube initial a été défini a priori et les performances en matière de résistance aux contraintes et d'allongement CLc, CLv, dLp et dLt, établies précédemment ne correspondent pas en général aux objectifs assignés qui sont CLco, CLvo, dLpo, dLto

- Etape 7 : Si les différences entre les performances du tube défini a priori et les objectifs ne sont pas trop grandes, on assigne aux variations globales VG(CLc), VG(CLv), VG(dLp), VG(dLt) les valeurs de ces différences. Les coefficients de la matrice inverse étant connues, on détermine alors les écarts ΔAc, ΔAv, ΔEc, ΔEv à appliquer respectivement aux quatre paramètres pour combler ces différences. On obtient ainsi les valeurs des angles d'enroulement des fibres des différentes nappes et l'épaisseur des différentes couches permettant d'obtenir de façon précise les objectifs fixés.

- Etape 8 : Si lesdites différences sont trop importantes, on obtient de meilleurs résultats en procédant par étapes successives. On assigne aux variations globales VG(CLc), VG(CLv), VG(dLp) et VG(dLt), des valeurs déterminées inférieures aux différences à combler. Ceci permet de déterminer les variations correspondantes des quatre paramètres. Le tube modifié caractérisé par les nouvelles valeurs des paramètres est utilisé comme nouveau tube de référence.

Une nouvelle fois, on répète l'étape 3 de manière à déterminer les nouvelles contraintes limites et allongements CLc, CLv, dLp, dLt du nouveau tube de référence, puis les étapes 4 à 6 et 8 de manière à obtenir de nouvelles relations reliant les paramètres aux nouvelles variations globales obtenues.

De nouveaux cycles sont effectués jusqu'à ce que les écarts finaux à combler entre les objectifs et les variations globales obtenues soient suffisamment faibles Un dernier cycle terminé par l'étape 7, permet d'aboutir aux valeurs précises des paramètres du tube optimisé.

Dans l'exemple donné ci-après pour bien montrer la précision que l'on peut atteindre dans la détermination des caractéristiques d'un tube en matériaux composites, on considère le cas où le tube comporte une paire de couches superposées réalisées respectivement par bobinage de fibres de verre et de fibres de carbone sur un noyau tubulaire à symétrie cylindrique de diamètre imposé 0,2308 m par exemple, ces couches de fibres étant incorporées dans un liant en résine. Des mesures permettent de connaître les caractéristiques propres des couches en carbone d'une part et des couches en verre d'autre part. Les valeurs mesurées pour différents paramètres sont données ci-dessous.

| CARACTERISTIQUE | CARBONE | VERRE |
|---|---|---|
| Module d'élasticité : | | |
| . dans le sens des fibres | 140 000 MPa | 56 000 MPa |
| . dans une direction transverse (dégradé) | 1 000 MPa | |
| Module de cisaillement (dégradé) | 1 000 MPa | 1 000 MPa |
| Coefficient de Poisson | 0,28 | 0,28 |
| Contrainte limite dans le sens des fibres | 1 200 MPa | 1 500 MPa |
| Dilatation thermique : | | |
| . dans le sens des fibres | 0 | $4 \times 10^{-6}/°C$ |
| . dans une direction transverse | $40 \times 10^{-6}/°C$ | $35 \times 10^{-6}/°C$ |

L'objectif à atteindre est défini par les caractéristiques suivantes des allongements et contraintes-limites :
- La contrainte-limite dans la couche en carbone CLco pour une traction de 4500 kN est fixée à 1200 MPa;
- La contrainte-limite dans la couche en verre CLvo pour une pression fixée de 105 MPa, est fixée à 1500 MPa; et
- On veut que les allongements dLpo et dLto du tube sous l'effet de la température et de la pression restent sensiblement nuls.

Par la mise en oeuvre du procédé telle qu'elle a été définie précédemment, à partir d'un tube initial aux caractéristiques non optimisées, conduit aux valeurs suivantes pour les angles de bobinage et les épaisseurs des couches :

|  | angle | épaisseur |
|---|---|---|
| carbone | 15,84° | 0,0052 m |
| verre | 59,33° | 0,0103 m |

A titre de vérification, on détermine les allongements et contraintes limites que subit un tube constitué par superposition sur le noyau d'une couche en fibres de verre et d'une autre en fibres de carbone avec les valeurs angulaires et les épaisseurs ci-dessus. Les résultats obtenus sont les suivants :
- contrainte limite CLco pour une traction de 4500 kN : 1198 MPa
- contrainte limite CLvo pour une pression de 105 MPa : 1499 MPa
- allongement maximal dLto : $-0,0014 * 10^{-6}/°C$
- allongement maximal dLpo : $0,014 * 10^{-6}/Mpa$.

On vérifie donc bien que le procédé selon l'invention conduit à des résultats pratiquement identiques aux allongements et contraintes spécifiés.

Le procédé a été décrit en considérant le cas d'un tube à symétrie cylindrique constitué par superposition d'au moins deux couches réalisées à partir de fibres de deux matériaux différents, les couches réalisées à partir d'un matériau donné ayant par exemple sensiblement même angle de bobinage et même épaisseur. Dans ces conditions, le nombre de paramètres à déterminer se réduit à quatre. Mais on ne sortirait pas du cadre de l'invention en appliquant le procédé a des tubes dont la forme et la constitution nécessitent la détermination d'un plus grand nombre de paramètres pour satisfaire à d'autres conditions particulières. On peut par exemple constituer un tube multi-couches à partir de deux sortes de fibres différentes, chaque couche comportant plusieurs paires de nappes de fibres où l'angle de bobinage des fibres d'une même substance varie d'une nappe à une autre et d'une couche à une autre, autour d'une valeur moyenne. Pour une valeur angulaire moyenne fixée par exemple à 60°, on fera varier par exemple les angles de bobinage dans la fourchette (55°, 65°). Quel que soit le nombre de paramètres significatifs, on procède de la même manière que précédemment en cherchant les coefficients des relations linéaires reliant des écarts appliqués successivement à tous les paramètres et leurs effets sur les contraintes et allongements.

## Revendications

1.  Procédé pour optimiser les caractéristiques de tubes multi-couches en matériaux composites constitués chacun d'un certain nombre n de couches de matériaux composites et comportant chacune plusieurs nappes de fibres enroulées en hélice, les différentes couches étant définies par au moins deux paramètres caractéristiques, de manière que leur allongement sous l'effet de la température et de la pression, ainsi que les contraintes limites subies par les différentes couches pour des valeurs maximales imposées des forces de traction et de pression suceptibles de leur être appliqués, soient très proches de valeurs limites spécifiées, le procédé étant caractérisé en ce que:
    - l'on définit un tube initial en imposant a priori un ensemble de valeurs pour lesdits paramètres,
    - on détermine pour le tube initial ainsi défini, les valeurs prises par lesdits allongements et contraintes limites,
    - on détermine l'incidence sur lesdits allongements et contraintes limites, de faibles écarts appliqués successivement à chacun des paramètres caractérisant le tube initial, de manière à établir des relations linéaires liant globalement les valeurs de chacun desdits allongements et contraintes limites aux écarts appliqués;
    - on détermine les relations inverses traduisant l'incidence des variations des valeurs desdits allongements et contraintes limites sur les valeurs des différents paramètres, et
    - on sélectionne de proche en proche les variations à imposer aux paramètres définissant le tube pour approcher aussi près que l'on veut des valeurs spécifiées pour les allongements et contraintes limites.

2.  Procédé pour optimiser les caractéristiques de tubes multi-couches à symétrie cylindrique réalisés en matériaux composites et constitués d'un certain nombre n de couches réalisées à partir d'au moins deux matériaux composites différents et comportant chacune plusieurs nappes de fibres enroulées en hélice, les différentes couches étant définies par au moins deux paramètres caractéristiques qui sont leurs épaisseurs respectives et les angles entre les directions d'allongement des fibres des différentes nappes et l'axe du tube, de manière que leurs allongements(dLp,dLt) sous l'effet de la pression et de la température, la contrainte limite (CLc) pour une traction spécifiée subies par les couches réalisées dans un même premier matériau composite et la contrainte limite(CLv) pour une pression maximale spécifiée, subie par les couches réalisées dans le même second matériau composite soient très proches de valeurs limites spécifiées (CLco,CLvo,dLpo,dLto), le procédé étant caractérisé en ce que :

- l'on définit un tube initial en imposant a priori au moins une valeur commune d'épaisseur (Ec,Ev) pour les couches réalisées dans un même matériau composite et au moins une valeur angulaire commune d'enroulement(Ac,Av) pour les fibres des couches réalisées dans un même matériau composite,
- on détermine les valeurs pour le tube initial ainsi défini, des allongements(dLp,dLt) et contraintes limites(CLc,CLv),
- on détermine les incidences sur lesdits allongements et contraintes, de faibles écarts appliqués successivement à chacune des deux valeurs angulaires (Ac,Av) et des deux épaisseurs (Ec,Ev) caractérisant le tube initial, de manière à établir des relations linéaires liant globalement les variations (VG(CLc),VG(CLv), VG(dLp), VG(dLt)) des valeurs de chacun desdits allongements et contraintes à tous les écarts appliqués,
- on détermine les relations inverses traduisant l'incidence des variations des valeurs desdits allongements et contraintes sur les valeurs des différents paramètres(Ac,Av,Ec,Ev), et
- on sélectionne de proche en proche les variations à imposer auxdits angles d'enroulement et auxdites épaisseurs définissant lesdits tubes pour réduire les écarts entre les allongements et contraintes limites déterminées pour le tube et les allongements et contraintes limites spécifiées de manière à se rapprocher aussi près que l'on veut desdits allongements et contraintes spécifiés.

3. Procédé selon la revendication 2, caractérisé en ce que le tube comporte des couches réalisées avec des fibres de carbone enroulées avec un pas d'enroulement relativement grand et des couches réalisées avec des fibres de verre enroulées avec un pas d'enroulement plus faible.

4. Procédé selon la revendication 3, caractérisé en ce que les fibres de toutes les couches réalisées à partir d'un même matériau ont un pas d'enroulement sensiblement identique.

5. Procédé selon l'une des revendications précédentes, caractérisé en ce que l'on détermine l'incidence des valeurs desdits allongements et contraintes limites sur les différents paramètres en déterminant la matrice inverse de la matrice constituée par les coefficients des relations linéaires reliant lesdits allongements et contraintes limites auxdits écarts appliqués.

6. Tube en matériaux composites optimisé par le procédé défini par l'une des revendications précédentes, comportant un certain nombre n de couches de matériaux composites constituées chacune de plusieurs nappes de fibres enroulées en hélice, les différentes couches étant définies par leurs épaisseurs et les angles d'enroulement des fibres, caractérisé en ce que certaines desdites couches sont réalisées avec des fibres de carbone enroulées avec un angle d'enroulement compris entre 10 et 25 degrés et certaines autres couches sont réalisées avec des fibres de verre enroulées avec un angle d'enroulement compris entre 50 et 75 degrés, et en ce que les valeurs des angles d'enroulement dans les fourchettes angulaires spécifiées ainsi que les épaisseurs des différentes couches sont optimisés pour que l'allongement (dLp, dLt) du tube sous l'effet de la pression et/ou de la température, dans une gamme fixée de variation de température et de pression, soit sensiblement nul, et que la contrainte limite (CLc) pour une traction spécifiée subie par les couches réalisées dans un même premier matériau composite ainsi que la contrainte limite (CLv) pour une pression maximale spécifiée, subie par les couches réalisées dans le même second matériau composite, soient très proches de valeurs limites spécifiées (CLco, CLvo, dLpo, dLto).

7. Tube selon la revendication 6, caractérisé en ce que les fiches de toutes les couches réalisées à partir d'un même matériau ont un pas d'enroulement sensiblement identique.

8. Tube selon la revendication 6, caractérisé en ce que les fibres des différentes couches réalisées avec un même matériau sont bobinées avec un pas d'enroulement variant d'une couche à l'autre autour d'une valeur moyenne.

9. Tube selon la revendication 6, réalisé à partir de fibres de carbone et de verre dont les modules d'élasticité dans le sens des fibres sont respectivement de l'ordre de 140 GPa et 56 GPa, les modules dégradés d'élasticité transverse et de cisaillement sont de l'ordre de 1 GPa, les coefficients de Poisson sensiblement égaux à 0,28, ces fibres pouvant supporter des contraintes limites respectives de l'ordre de 1,2 GPa et 1,5 GPa et étant bobinées sur un noyau dont le diamètre est de l'ordre de 0,20 mètre, ce tube étant caractérisé en ce que, pour une force de traction limite de l'ordre de 4500 kN et une pression limite de l'ordre de 100 MPa avec une variation d'allongement sensiblement nulle pour des plages de variation imposées de la pression et de la température, ledit tube est réalisé avec des couches de fibres de carbone d'épaisseur voisine de $5*10^{-3}$ mètre bobinées sous un angle de l'ordre de 15 degrés, et avec des couches de fibres de verre d'épaisseur voisine de $10*10^{-3}$ mètre bobinées sous un angle de l'ordre de 60 degrés.

10. Tube selon la revendication 9, caractérisé en ce que lesdites valeurs angulaires de bobinage des fibres sont des valeurs moyennes, les angles de bobinage des différentes couches réalisées avec un même type de fibre variant d'une couche à une autre autour desdites valeurs moyennes.

## Claims

1. A process for optimizing the characteristics of, multilayered tubes made from composite materials each consisting of a given number n of layers of composite materials and each comprising several strips of helically wound fibres, the different layers being defined by at least two characteristic parameters, so that their elongation under the effect of the temperature and pressure, and the limit strains undergone by the different layers for imposed maximum values of the tensile and pressure forces which may be applied to them, are very close to specified limit values, the process being characterised in that:
   - an initial tube is defined by imposing a priori a set of values for the said parameters,
   - for the initial tube thus defined, the values adopted by the said limit elongations and strains are determined,
   - the effect on the said limit elongations and strains of slight deviations successively applied to each of the parameters characterising the initial tube is determined, so as to establish linear relationships globally relating the values of each of the said limit elongations and strains to the applied deviations,
   - the inverse relationships expressing the effect of the variations in the values of the said limit elongations and strains on the values of the various parameters are determined, and
   - the variations to be imposed on the parameters defining the tube are selected step by step so as to come as close as desired to the values specified for the limit elongations and strains.

2. A process for optimizing the characteristics of multilayered cylindrically symmetrical tubes made from composite materials and consisting of a given number n of layers produced from at least two different composite materials and each of them comprising several strips of helically wound fibres, the different layers being defined by at least two characteristic parameters which are their respective thicknesses and the angles between the directions of elongation of the fibres of the various strips and the axis of the tube, so that their elongations (dLp, dLt) under the effect of the pressure and temperature, the limit strain (CLc) for a specified tensile stress undergone by the layers made from the same first composite material and the limit strain (CLv) for a specified maximum pressure undergone by the layers made from the same second composite material are very close to specified limit values (CLco, CLvo, dLpo, dLto), the process being characterised in that:
   - an initial tube is defined by imposing a priori at least one common thickness value (Ec, Ev) for the layers made from the same composite material and at least one common winding angle value (Ac, Av) for the fibres of the layers made from the same composite material,
   - the values, for the initial tube thus defined, of the limit elongations (dLp, dLt) and strains (CLc, CLv) are determined,
   - the effects, on the said elongations and strains, of slight deviations successively applied to each of the two angular values (Ac, Av) and two thicknesses (Ec, Ev) characterising the initial tube are determined, so as to establish linear relationships globally relating the variations (VG(CLc), VG(CLv), VG(dLp), VG(dLt)) in the values of each of the said limit elongations and strains to the applied deviations;
   - the inverse relationships expressing the effect of the variations in the values of the said elongations and strains on the values of the different parameters (Ac, Av, Ec, Ev), are determined, and
   - the variations to be imposed on the said winding angles and said thicknesses defining the said tubes are selected step by step in order to reduce the deviations between the limit elongations and strains determined for the tube and the specified limit elongations and strains so as to come as close as desired to the said specified elongations and strains.

**3.** A process according to Claim 2, characterised in that the tube comprises layers produced with carbon fibres wound with a relatively large winding pitch and layers produced with glass fibres wound with a smaller winding pitch.

**4.** A process according to Claim 3, characterised in that the fibres in all the layers made from the same material have a substantially identical winding pitch.

**5.** A process according to one of the preceding claims, characterised in that the effect of the values of the said limit elongations and stresses on the different parameters is determined by determining the matrix inverse to the matrix consisting of the coefficients of the linear relationships relating the said limit elongations and strains to the said applied deviations.

**6.** A tube made from composite materials optimized through the process defined by one of the preceding claims, comprising a given number n of layers of composite materials, each consisting of several strips of helically wound fibres, the different layers being defined by their thickness and the winding angles of the fibres, characterised in that some of the said layers are produced with carbon fibres wound with a winding angle of between 10 and 25 degrees and some other layers are produced with glass fibres wound with a winding angle of between 50 and 75 degrees, and in that the values of the winding angles in the ranges of angles specified and the thicknesses of the different layers are optimized so that the elongation (dLp, dLt) of the tube under the effect of the pressure and/or temperature, within a fixed range of temperature and pressure variation, is substantially nil, and that the limit strain (CLc) for a specified tensile stress undergone by the layers made from the same first composite material as well as the limit strain (CLv) for a specified maximum pressure undergone by the layers made from the same second composite material, are very close to specified limit values (CLco, CLvo, dLpo, dLto).

**7.** A tube according to Claim 6, characterised in that the sheets of all the layers made from the same material have a substantially identical winding pitch.

**8.** A tube according to Claim 6, characterised in that the fibres of the different layers made from the same material are wound with a winding pitch varying from one layer to another around an average value.

**9.** A tube according to Claim 6, made from carbon and glass fibres where moduli of elasticity in the direction of the fibres are respectively of the order of 140 GPa and 56 GPa, the degraded moduli of transverse elasticity and shear are of the order of 1 GPa and the Poisson's ratios are approximately 0.28, these fibres being able to withstand respective limit strains of the order of 1.2 Gpa and 1.5 GPa and being wound on a core the diameter of which is of the order of 0.20 metres, this tube being characterised in that, for a limit tensile stress of about 4500 kN and a limit pressure of about 100 MPa with an elongation variation which is substantially nil for imposed ranges of variation in the pressure and temperature, the said tube is made from layers of carbon fibres with a thickness of about $5*10^{-3}$ metres wound at an angle of about 15 degrees, and from layers of glass fibres with a thickness of about $10*10^{-3}$ metres wound at an angle of about 60 degrees.

**10.** A tube according to Claim 9, characterised in that the said winding angle values of the fibres are average values, the winding angles of the different layers made from the same type of fibre varying from one layer to another around the said average values.

## Patentansprüche

**1.** Verfahren zum Optimieren der Charakteristiken mehrschichtiger Rohre aus Verbundmaterialien, jeweils aus einer gewissen Anzahl n von Schichten aus Verbundmaterialien bestehend und je mehrere wendelförmig gewickelte Faserbahnen umfassend, wobei die verschiedenen Schichten definiert werden durch wenigstens zwei charakteristische Parameter, derart, daß deren Längung unter dem Einfluß der Temperatur und des Drucks sowie die von den verschiedenen Schichten erlittenen Grenzbeanspruchungen für Maximalwerte der aufgebrachten Zug- und Druckspannungen, die an sie gelegt werden können, sehr nahe spezifizierten Grenzwerten sind, wobei das Verfahren sich dadurch auszeichnet, daß:
  - man ein Anfangsrohr definiert, indem man a priori eine Gruppe von Werten für diese Parameter zuweist,
  - man für das so definierte Anfangsrohr die Werte definiert, die von den Längungen und Grenzbelastungen angenommen werden,

- man den Einfluß von geringen Abweichungen auf diese Längungen und Grenzbeanspruchungen bestimmt, die aufeinanderfolgend an jedem der das Anfangsrohr charakterisierenden Parametern angebracht werden, derart, daß Linearbeziehungen hergestellt werden, die global die Werte jeder dieser Längungen und Grenzbeanspruchungen mit den angelegten Abweichungen verknüpfen,

- man die umgekehrten Beziehungen bestimmt, welche den Einfluß der Variationen der Werte dieser Längungen und Grenzbeanspruchungen auf die Werte der verschiedenen Parameter umfassen und

- man näherungsweise die Variationen auswählt, die an die das Rohr definierenden Parameter gelegt werden, um so nahe wie man will, spezifizierte Werte für Längungen und Grenzbeanspruchungen anzunähern.

2. Verfahren zum Optimieren der Charakteristiken mehrschichtiger Rohre mit zylindrischer Symmetrie, die aus Verbundmaterialien hergestellt sind und aus einer gewissen Anzahl n von Schichten aufgebaut sind, die ausgehend von wenigstens zwei unterschiedlichen Verbundmaterialien hergestellt sind und je mehrere Bahnen von wendelförmig gewickelten Fasern umfassen, wobei die verschiedenen Schichten definiert werden durch wenigstens zwei charakteristische Parameter, ihre jeweiligen Dicken und die Winkel zwischen den Längungsrichtungen der Fasern der verschiedenen Bahnen sowie die Achse des Rohres sind derart, daß ihre Längungen (dLp,dLt) unter dem Einfluß des Drucks und der Temperatur, die Grenzbeanspruchung (CLc) für einen spezifizierten Zug, den die in einem ersten Verbundmaterial hergestellten Schichten erfahren und die Grenzbelastung (CLv) für einen spezifizierten Maximaldruck, den die in dem zweiten Verbundmaterial realisierten Schichten erfahren, sehr nahe zu spezifizierten Grenzwerten (CLco,CLvo,dLpo,dLto) sind, wobei das Verfahren sich dadurch auszeichnet, daß:

- man ein Anfangsrohr definiert, indem man a priori wenigstens einen gemeinsamen Wert der Dicke (Ec,Ev) für die Schichten zuweist, die aus ein und dem gleichen Verbundmaterial hergestellt sind und wenigstens einen gemeinsamen Winkelwikkelwert (Ac,Av) zuweist für die Faserschichten, die in ein und dem gleichen Verbundmaterial hergestellt sind,

- man die Werte für das so definierte Anfangsrohr, Längungen (dLp,dLt) und Grenzbeanspruchungen (CLc,CLv) bestimmt,

- man die Einflüsse - auf diese Längungen und Beanspruchungen - von geringen Abweichungen bestimmt, die aufeinanderfolgend an jedem der beiden Winkelwerte (Ac,Av) und der beiden Dicken (Ec,Ev), die das Anfangsrohr charakterisieren, angebracht werden, derart, daß Linearbeziehungen hergestellt werden, welche global die Veränderungen (VG(CLc),VG(CLv),VG(dLp),VG(dLt)) der Werte jeder dieser Längungen und Beanspruchungen mit sämtliche angebrachten Abweichungen verknüpft,

- man die umgekehrten Beziehungen bestimmt, die den Einfluß der Veränderungen der Werte dieser Längungen und Beanspruchungen auf die Werte der unterschiedlichen Parameter (Ac,Av,Ec,Ev) umsetzen, und

- man näherungsweise die Veränderungen auswählt, die an diese Wickelwinkel und diese Dicken gelegt werden, welche diese Rohre definieren, um die Abweichungen zwischen den Längungen und bestimmten Grenzbeanspruchungen für das Rohr und die Längungen und spezifizierten Grenzbeanspruchungen derart vermindern, daß sie sich so stark wie man will diesen spezifizierten Längungen und Beanspruchungen nähern.

3. Verfahren nach Anspruch 1, dadurch gekennzeichnet, daß das Rohr Schichten umfaßt, die mit Carbonfasern hergestellt sind, die mit einem relativ großen Wicklungsschritt gewickelt sind, sowie Schichten, die mit Fasern hergestellt sind, die mit einem geringeren Wicklungsschritt gewickelt sind.

4. Verfahren nach Anspruch 3, dadurch gekennzeichnet, daß die Fasern sämtlicher hergestellter Schichten aus ein und dem gleichen Material einen im wesentlichen identischen Wicklungsschritt aufweisen.

5. Verfahren nach einem der vorhergehenden Ansprüche, dadurch gekennzeichnet, daß man den Einfluß der Werte dieser Längungen und Grenzbeanspruchungen auf die unterschiedlichen Parameter bestimmt, indem man die Kehrmatrix der Matrix bestimmt, die durch die Koeffizienten der linearen Beziehungen gebildet wurde, welche diese Längungen und Grenzbeanspruchungen mit den angelegten Abweichungen verknüpfen.

6. Rohr aus Verbundmaterialien, optimiert durch das Verfahren nach einem der vorhergehenden Ansprüche, mit einer gewissen Anzahl von n von Schichten aus Verbundmaterialien, die je aus mehreren wendelförmig gewickelten Faserbahnen bestehen, wobei die unterschiedlichen Schichten definiert werden durch ihre Dicken und Faserwicklungswinkel, dadurch gekennzeichnet, daß gewisse dieser Schichten hergestellt sind mit Carbonfasern, die mit einem Wicklungswinkel zwischen 10 und 25° gewickelt sind und gewisse andere Schichten mit Glasfasern hergestellt sind, die mit einem Wicklungswinkel zwischen 50 und 75° gewickelt sind und daß die Werte der Wicklungswinkel in den spezifizierten Winkelgabelbereichen sowie die Dicken der verschiedenen Schichten optimiert sind, damit die Längung (dLp, dLt) des Rohrs unter dem Einfluß des Drucks und/oder der Temperatur in einem festgelegten Variationsbereich von Druck und Temperatur im wesentlichen Null sind und daß die Grenzbeanspruchung (CLc) für einen spezifizierten Zug, der von den in ein und dem gleichen Verbundmaterial hergestellten Schichten erfahren wurde, sowie die Grenzbeanspruchung (CLv) für einen spezifizierten Maximaldruck, die von den Schichten erfahren wurde, die aus dem gleichen zweiten Verbundmaterial hergestellt wurden, sehr nahe von spezifizierten Grenzwerten (CLco, CLvo, dLpo, dLto) sind.

7. Rohr nach Anspruch 6, dadurch gekennzeichnet, daß die Bänder sämtlicher ausgehend von ein und dem gleichen Material hergestellter Schichten einen im wesentlichen identischen Wicklungsschritt haben.

8. Rohr nach Anspruch 6, dadurch gekennzeichnet, daß die Fasern der verschiedenen aus ein und dem gleichen Material hergestellten Schichten mit einem Wicklungsschritt aufgespult sind, der sich von einer Schicht zur anderen um einen Mittelwert verändert.

9. Rohr nach Anspruch 6, hergestellt aus Kohlenstoff- und Glasfasern, deren Elastizitätsmoduln in Richtung der Fasern jeweils in der Größenordnung von 140 GPa und 56 GPa liegen, wobei die verschlechterten Elastizitätsmoduln, Quermodul und Schermodul, in der Größenordnung von 1 GPa liegen, die Poisson Koeffizienten im wesentlichen gleich 0,28 sind, wobei diese Fasern jeweilige Grenzbeanspruchungen in der Größenordnung von 1,2 GPa und 1,5 GPa auszuhalten in der Lage sind und auf einen Kern gewickelt sind, dessen Durchmesser in der Größenordnung von 0,20 Meter liegt, wobei das Rohr sich dadurch auszeichnet, daß für eine Grenzzugkraft in der Größenordnung von 4500 kN und einen Grenzdruck in der Größenordnung von 100 MPa mit einer Längenveränderung von im wesentlichen null für Variationsbereiche, die durch Druck und Tamperatur auferlegt sind, dieses Rohr hergestellt wird mit Karbonfaserschichten von einer Dicke benachbart $5 \times 10^{-3}$ Meter, die unter einem Winkel in der Größenordnung von 15° gewickelt sind und mit Glasfaserschichten einer Dicke benachbart $10 \times 10^{-3}$ Meter, die unter einem Winkel in der Größenordnung von 60° gewickelt sind.

10. Rohr nach Anspruch 9, dadurch gekennzeichnet, daß diese Winkel-Wickelwerte der Fasern Mittelwerte sind, wobei die Wickelwinkel der verschiedenen mit ein und dem gleichen Fasertyp hergesellten Schichten von einer Schicht zur anderen um diese Mittelwerte schwanken.